# EUROPEAN PATENT SPECIFICATION

(11) **EP 0 757 468 B1**
(45) Date of publication and mention of the grant of the patent: **19.12.2001**
(21) Application number: 96104860.0
(22) Date of filing: 27.03.1996
(51) Int. Cl.: H04M 11/00, H04M 1/64

(54) **Telephone line connected apparatus for remote controlling both a lamp lighting and a sound message playing**
Am Telefonnetz angeschlossenes Gerät für die Fernschaltbetätigung von Lampen und die Wiedergabe von Audiomeldungen
Appareil relié au réseau des télécommunications, pour commander à distance l'allumage de lampes et pour la reproduction de messages sonores

(30) Priority: 03.08.1995 IT ME950018
(43) Date of publication of application: 05.02.1997
(73) Proprietor: Sollima, Giovanni, 98124 Messina (IT)
(72) Inventor: Sollima, Giovanni, 98124 Messina (IT)

(56) References cited:
- GB-A- 2 086 186
- US-A- 5 051 720
- US-A- 5 119 412
- IEEE TRANSACTIONS ON CONSUMER ELECTRONICS, vol. 40, no. 1, February 1994, NEW YORK, US, pages 28-34, XP000441780 EDDIE M.C. WONG: "A Phone-based Remote Controller for Home and Office Automation"

## Description

The present invention concerns a telephone line connected apparatus for remote-controlling both a lamp lighting and a previouly recorded sound message playing in a place, specially a sacred place, wherein it is installed. It often will be called below "telephone apparatus".

The telephone apparatus according to the present invention can be rung by a believer, in particular a sick person, and people in general who are going through hard times. It is provided to fulfil faith needs and comfort people physically and morally. Further, it is able to solve also heavy situations either completely or partially.

As one can image, a believer in a painfull situation can be relieved very much by calling a Sanctuary up in which a telephone apparatus according to the invention is installed, at any time in order to light a lamp on the altar of, e.g., either Our Lady of Pompei or Our Lady of Lourdes and listen to the "Hail Mary" of Gounod or another composition together with Her. This sacred music may be heard inside that

Sanctuary at an acceptable volume that does not disturb those present who are both meditating and praying.

The above mentioned one is only an example of use of the telephone apparatus according to this invention. since, as everyone can appreciate, it can be installed also in other sacred places, as a cemetery, a monument, a statue, or anywhere one wants to make up his/her absence efficaciously.

The invention seeks to provide a telephone line connected apparatus for remote-controlling both a lamp lighting and a previouly recorded sound message playing in a place, specially a sacred place, wherein it is installed, like a telephone-answering system, comprising a microprocessor and its associated sound magnetic recorder, said magnetic recorder being connected with said microprocessor through a first control circuit which is provided with a first relay to switch on and off a first power feeding circuit of said magnetic recorder, the phonic output of which is connected, on the one hand, with an external loud-speaker through a first amplifier, and on the other hand, through a second amplifier, with a telephone coupler to the telephone line; the apparatus further comprises means for connecting at least one external lamp to a second electrical circuit, which is parallel to said first circuit and controlled by a second control circuit which is provided with a second relay and parallel to said first control circuit, and switches on and off contemporaneously with said first control circuit.

In use, when one rings the telephone apparatus according to the invention, he/she is able to light a lamp or other light source, drive a cassette tape magnetic recorder for playing previously recorded sound messages or control other previously suitably arranged electromechanical devices.

The invention is described more closely below with reference to the enclosed drawings, in which:

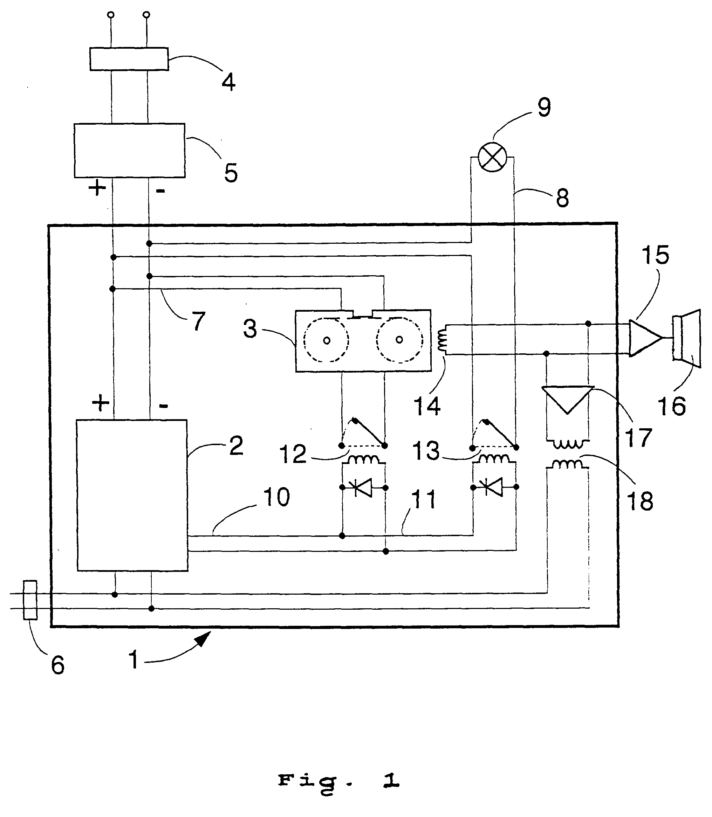

Figure 1 shows a schematic block diagram, comprising circuit components, of an embodiment of a telephone line connected apparatus according to the invention.

A telephone apparatus according to the invention is generally indicated by the numeral 1 in figure, wherein a microprocessor, and recording and playing circuits, and control circuits, circuits which are both connected with the microprocessor, are indicated by the numeral 2, and a cassette tape magnetic recorder, including a motor, transmission wheels, driving belts and a sound head assembly, is indicated by the numeral 3. These parts, as known, are not represented in details for sake of simplicity.

The microprocessor 2 is connected with a current socket 4 through a power supplier 5. The telephone apparatus 1 is connected with the telephone line through a telephone socket 6. As usually, a suitable circuitry (not shown) cooperates with the microprocessor 2, thereby it is able to "talk together" with the mechanical parts, as well with the electrical parts of the telephone apparatus in a known way, that therefore is not described more in details.

According to the invention, both a feeding circuit 7 of the cassette tape magnetic recorder 3 and a feeding circuit 8 of at least a lamp 9 are provided. It is obvious that the feeding circuit 8 may feed a plurality of lamps or other electromechanical device (not shown). It is also evident that these devices can be fed both by a voltage of direct current, as shown in the drawings, or by mains voltage. Relays 12 and 13, that are controlled by microprocessor 2 as it will be described below, are provided in control circuits 10 and 11, respectively. A reproducing head 14 of the cassette tape magnetic recorder 3, i.e. its phonic output, is connected, on the one hand, with an external loud-speaker 16 through an amplifier 15, and on the other hand, through an amplifier 17, with a telephone coupler 18 to the telephone line.

The operation of the telephone apparatus 1 according to the invention is as follows.

Before the telephone apparatus 1 is at calling person's disposal, the microprocessor 2 is operated to record a sound message on the tape of the cassette tape magnetic recorder. This sound message will be propagated, if that is the case, in the installation place of the telephone apparatus 1 and at the same time will be listened by the calling people.

When the telephone apparatus 1 rings, upon a voltage change across the line, after a set number of call signals, the microprocessor 2 operates the tape magnetic recorder 3 and switches on the lamp 9 at the same time by closing the feeding circuits 7 and 8 by the control circuits 10 and 11, respectively.

The tape magnetic recorder 3 plays its tape with the previously recorded sound message, which is sent to the telephone coupler 18 and in the meantime to the loud-speaker 16. The sound message will be propagated in the sacred place, in the case, at an adjustable volume compatibly with the silence needs for those present who are meditating and praying.

Both the operations of the sound message playing and the lamp lighting are performed at the same time, since the time of the electrical current feeding depends on the sound message time. They represent together the full automatic operative cycle of the invention, that occurs at every call during the period set for the tape playing. In order to prevent any profit from the telephone apparatus 1, meanwhile to fulfil plural calls, said period is adjusted by a timer included in the control circuits 10 and 11 inside the microprocessor 2, therefore not shown.

The cassette tape can be a rec./play microcassette MC 5, having a length of 5 minutes.The telephone apparatus 1 is provided with one microcassette, thereon a sound message, comprising a short answer to the calling person, a musical composition, a prayer or other. The microcassette does not receive input messages from the calling person. When the sound message is finished, the microcassette tape is re-wound in the initial position and is ready for a following call, while the light source is switched off under the control of said timer.

The details of the telephone apparatus can be changed however without coming out of the scope of the invention defined by the following claim.

## Claims

1. Telephone line connected apparatus for remote-controlling both a lamp lighting and a praviouly recorded sound message playing in a place, specially a sacred place, wherein it is installed, like a telephone-answering system, comprising a microprocessor (2) and its associated sound magnetic recorder (3),
said magnetic recorder (3) being connected with said microprocessor (2) through a first control circuit (10) which is provided with a first relay (12) to switch on and off a first power feeding circuit (7) of said magnetic recorder (3), the phonic output of which is connected, on the one hand, with an external loud-speaker (16) through a first amplifier (15), and on the other hand, through a second amplifier (17), with a telephone coupler (18) to the telephone line, **characterised in that**
the apparatus further comprises means for connecting at least one external lamp (9) to a second electrical circuit (8), which is parallel to said first circuit (7) and controlled by a second control circuit (11) which is provided with a second relay (13) and parallel to said first control circuit (10), and adapted to switch on and off contemporaneously with said first control circuit (10).

## Patentansprüche

1. Am Telefonnetz angeschlossenes Gerät für die Fernschaltbetätigung von Lampen und die Wiedergabe von Audiomeldungen, die an einem Ort, besonders an einem heiligen Ort abgespielt werden, wo dieses installiert ist, wie z. B. ein Anrufbeantworter, bestehend aus einem Mikroprozessor (2) und einem dazugehörigen magnetischen Tonaufnahmegerät (3), das mit dem besagten Mikroprozessor (2) über einen ersten Steuerschaltkreis (10) in der Gestalt eines ersten Relais (12) verbunden ist, um einen ersten Stromkreis (7) des besagten magnetischen Aufnahmegeräts (3) zu schließen oder zu öffnen, dessen fonischer Ausgang auf der einen Seite über einen ersten Verstärker (15) an einen externen Lautsprecher (16) und auf der anderen Seite über einen zweiten Verstärker (17) an einen Telefonkoppler (18) zum Telefonanschluss angeschlossen ist, **dadurch gekennzeichnet, dass** das Gerät darüber hinaus über Möglichkeiten verfügt, mindestens eine externe Lampe (9) an einen zweiten Stromkreis (8) anzuschließen, der parallel zum besagten ersten Stromkreis (7) ist und über einen zweiten Steuerschaltkreis (11) in der Gestalt eines zweiten Relais (13) gesteuert wird und parallel zum besagten ersten Stromkreis (10) ist und mit dem besagten ersten Steuerschaltkreis (10) gleichzeitig geschlossen und geöffnet wird.

## Revendications

1. Appareil relié au réseau des télécommunications, pour commander à distance l'allumage de lampes et pour la reproduction de messages sonores, dans un endroit, en particulier un lieu sacré, dans lequel il est installé, à l'instar d'un répondeur, comprenant un microprocesseur (2) et son enregistreur magnétique connexe (3), ledit enregistreur magnétique (3) étant connecté au microprocesseur (2) par un premier circuit de commande (10) équipé d'un premier relais (12) servant à allumer et couper le premier circuit d'alimentation électrique (7) de l'enregistreur magnétique (3), dont la sortie phonique est reliée, d'une part, à un haut-parleur externe (16) via un premier amplificateur (15) et, d'autre part, via un deuxième amplificateur (17) à un coupleur téléphonique (18) à la ligne téléphonique, **caractérisée en ce que** l'appareil comporte des moyens permettant de raccorder au moins une lampe externe (9) à un deuxième circuit électrique (8), qui est parallèle au premier circuit (7) et commandé par un deuxième circuit de commande (11) qui est équipé d'un deuxième relais (13) et qui est parallèle au premier circuit de commande (10), et adapté pour s'allumer et se couper en même temps que le premier circuit de commande (10).
